Europäisches Patentamt

European Patent Office

Office européen des brevets

(19)

(11) Veröffentlichungsnummer: **0 294 678 B1**

(12) **EUROPÄISCHE PATENTSCHRIFT**

(45) Veröffentlichungstag der Patentschrift: **11.03.92**

(51) Int. Cl.⁵: **G06F 11/10**

(21) Anmeldenummer: **88108636.7**

(22) Anmeldetag: **30.05.88**

(54) **Sicherungseinrichtung zum Absichern von Daten in Speichereinheiten einer Datenverarbeitungsanlage unter Verwendung eines Fehlererkennungs- und Fehlerkorrekturcodes.**

(30) Priorität: **04.06.87 DE 3718759**

(43) Veröffentlichungstag der Anmeldung:
**14.12.88 Patentblatt 88/50**

(45) Bekanntmachung des Hinweises auf die
Patenterteilung:
**11.03.92 Patentblatt 92/11**

(84) Benannte Vertragsstaaten:
**AT BE CH DE FR GB IT LI NL SE**

(56) Entgegenhaltungen:
**EP-A- 0 080 354**
**EP-A- 0 141 498**
**EP-A- 0 162 936**
**US-A- 4 612 640**

**W.W. PETERSON: "Error correcting codes",
2. Auflage, 1978, Seiten 44-47, MIT Press,
London, GB**

**IEEE TRANSACTIONS ON COMPUTERS, Band
C-34, Nr. 6, Juni 1985, Seiten 557-562, IEEE,
New York, US; L.A. DUNNING: "SEC-BED-DED
codes for error control in byte-organized
memory systems"**

(73) Patentinhaber: **Siemens Nixdorf Informationssysteme AG
Otto-Hahn-Ring 6
W-8000 München 83(DE)**

(72) Erfinder: **Bräuer, Gerald
Robert-Koch-Strasse 28
W-8012 Ottobrunn(DE)**

(74) Vertreter: **Fuchs, Franz-Josef, Dr.-Ing. et al
Postfach 22 13 17
W-8000 München 22(DE)**

EP 0 294 678 B1

**Beschreibung**

Die Erfindung betrifft eine Sicherungseinrichtung zum Absichern von Daten in Speichereinheiten einer Datenverarbeitungsanlage entsprechend dem Oberbegriff des Patentanspruches 1.

Zur Absicherung wichtiger Daten eignen sich vor allem fehlererkennende- und fehlerkorrigierende Codes, kurz ECC-Codes. Dabei wird je Dateneinheit der zu sichernden Daten ein Kontrollcode abgeleitet, der mit der zugehörigen Dateneinheit abgespeichert wird. Nach jedem Lesen einer Dateneinheit mit dem zugehörigen Kontrollcode wird der Kontrollcode neu gebildet und mit dem gelesenen Kontrollcode verglichen. Das Vergleichsergebnis, Syndrom genannt, kennzeichnet dann einen eventuell aufgetretenen Fehler.

Ein Beispiel für eine derartige Absicherung von gespeicherten Daten liefert die europäische Patentanmeldung EP-A2-0080354. Hierbei ist der Speicher je Dateneinheit der zu speichernden Daten und für jeweils einen zugehörigen Kontrollcode in mehrere gleich große parallel ansteuerbare Speichermodule unterteilt, wobei der Kontrollcode für sich in ein Speichermodul und die Dateneinheit unterteilt in die restlichen Speichermodule geschrieben wird. Die einzelnen Speichermodule werden jeweils über individuelle Adressentreiber angesteuert. Die Aufgabe der Sicherungseinrichtung ist es, einen durch einen fehlerhaften Adressentreiber verursachten Fehler zu erkennen und den fehlerhaften Adressentreiber zu lokalisieren. Ist nur ein Adressentreiber für einen eine Dateneinheit mit zugehörigem ECC-Code aufnehmenden Speicherplatz vorhanden, und ist dieser derart fehlerhaft, daß durch ihn ein anderer als der gewünschte Speicherplatz angesprochen wird, so ist beim Auslesen die gelesene Dateneinheit ebenso wie der zugehörige ECC-Code an sich fehlerfrei und es wird bei der Überprüfung der gelesenen Daten kein Fehler erkannt. Durch Aufteilung des Speicherplatzes für eine Dateneinheit mit zugehörigem Kontrollcode in mehrere parallel angeordnete und gleichzeitig jeweils von einem individuellen Adressentreiber angesteuerte Speichermodule werden die zu speichernden Daten bei einem fehlerhaften Adressentreiber nicht mehr insgesamt, sondern nur mehr teilweise verfälscht, was bei der Überprüfung der gelesenen Daten zu einer Fehlermeldung führt. In Verbindung mit der Adresse und der mittels ECC-Code gewonnenen Fehlermeldung ist der fehlerhafte Adressentreiber lokalisierbar.

In der Wirkung gleich ist ein kompletter Ausfall eines Speichermoduls der in der europäischen Anmeldung angegebenen Anordnung, so daß auch ausgefallene Speichermodule prinzipiell erkennbar sind. Ein Ausfall eines Speichermodules entspricht dabei einem Mehrbitfehler in der Breite des Speichermodules. Daneben sind je nach verwendetem ECC-Code Einzelbitfehler innerhalb eines Speichermodules nur bis zu einem gewissen Grad erkennbar und korrigierbar. Bei dem beschriebenen Ausführungsbeispiel wird zur Absicherung einer acht-bitstelligen Dateneinheit ein fünfbitstelliger ECC-Code verwendet, durch den Einzelbitfehler korrigierbar und Zweibitfehler erkennbar sind.Es sind damit 13 Bitstellen notwendig, um eine mit diesem ECC-Code abgesicherte Dateneinheit abspeichern zu können. In der Datenverarbeitungstechnik ist dies aber eine ungebräuchliche Größe. Gebräuchliche Größen sind Größen, die in einer Zweierpotenz ausgedrückt werden können. Bezogen auf das angegebene Ausführungsbeispiel weist hier dann ein Speicherplatz wenigstens 16 Bitstellen auf. Damit wird aber unnötiger Speicherplatz verbraucht.

Neben der oben erwähnten europäischen Patentanmeldung ist aus dem Patentdokument US 4 612 640 eine Sicherungseinrichtung zum Absichern von Daten in einteiligen Speichereinheiten einer Datenverarbeitungsanlage unter Verwendung eines Fehlererkennungsund Fehlerkorrekturcodes bekannt, bei der jeweils 8 Bit breite Datenworte mit 4 Kontrollbits abgesichert werden. Mit diesem Sicherungscode können aber nur Einbitfehler erkannt und korrigiert werden. Mehrbitfehler können nur insoweit erkannt werden, als nach einer vorgegebenen Anzahl von Versuchen, einen angenommenen Einbitfehler zu korrigieren, noch immer ein Fehler erkannt wird. In diesem Fall ist die Speichereinheit als Ganzes defekt, da keine Unterteilung in kleinere Einzelspeichereinheiten gegeben ist. Eine Aufteilung der Speichereinheit in mehrere Einzelspeicher kann nicht genutzt werden, weil bei einem Mehrbitfehler keine Zuordnung zu einem Einzelspeicher möglich ist.

Zum Aufbau eines ECC-Codes sei auf die einschlägige Literatur hingewiesen. Im besonderen seien der im April 1950 in Bell System Techn.Journal, Val.29, Seiten 1457 bis 160 erschienene Artikel "Error Detecting and Correcting Codes", von R.W.Hamming [1], das Kapitel 8 in "Nachrichtentechnik", Steinbuch/Rupprecht, Bd. 2, Seite 154 ff, Springer Verlag 1982 [2] und "Prüfbare und korrigierbare Codes" von W. Wesley Peterson, erschienen 1967 im R. Oldenbourg Verlag München und Wien [3], erwähnt. Danach sind ECC-Codes systematische Linearcodes, kurz (n,k)-Codes, mit einer Codewortlänge von n Bitstellen, zusammengesetzt aus k Informationsstellen und n-k Kontrollstellen. Ist die Herleitung der Kontrollstellen aus den Informationsstellen bekannt, ist die Bitverteilung innerhalb des Codeswortes, zum Beispiel für die Übertragung des Codewortes, beliebig wählbar. Ein einzelnes Codewort eines Linearcodes kann als Codevektor aufgefaßt werden. Ein Linearcode setzt sich dann aus einer Vielzahl von Codevektoren zusammen. Die Menge der Codevektoren läßt sich auf eine Untermenge linear unabhängiger Codevektoren zurückführen, aus der sich umgekehrt durch Linearkombination einzelner Codevektoren aus dieser Untermenge alle zum Linearcode gehörenden Codevektoren wieder ermitteln lassen. Für die Untermenge linear unabhängiger Codevektoren gibt es mehrere Lösungen. Die einer Untermenge angehörenden Codevektoren sind sogenannte Basisvektoren des betreffenden Linearcodes. Die Basisvektoren können als Zeilen einer Matrix G aufgefaßt werden. Die Matrix G heißt Basismatrix. Die Basismatrix

$$[G = J_k \, P]$$

setzt sich aus einer (k,k)-reihigen Einheitsmatrix $J_k$ und einer (n,n-k)-reihigen Prüfmatrix P zusammen. Aus einer bekannten Basismatrix G kann unmittelbar die zugehörige Kontrollmatrix

$$[H = P^T \, J_k]$$

aufgestellt werden. Aus der Kontrollmatrix H können die Abhängigkeiten der Kontrollstellen von den Informationsstellen direkt angegeben werden. Ein empfangenes Codewort bzw. ein empfangener Codevektor v ist fehlerfrei übertragen worden, wenn der Syndromvektor

$$[S = vH^T]$$

gleich dem Nullvektor ist. Im anderen Fall gibt der Syndromvektor S im Rahmen der Aussagekraft des verwendeten ECC-Codes Auskunft über den aufgetretenen Fehler.

Ein Linearcode ist ein vollständiger Linearcode, wenn die Anzahl der im Codewort verwendeten Bitstellen n der Anzahl der durch die Kontrollstellen einzeln ansprechbaren Bitstellen abzüglich 1 entspricht. Es ist aber möglich, verkürzte Linearcodes zu bilden, deren Codewortlänge n'<n ist. In diesem Fall weist die G Matrix entsprechend weniger Zeilen und Spalten auf. Hierzu wird auf die in [1], Kapitel 3 gezeigte Tabelle I hingewiesen, in der für einige Einbitfehler korrigierende Codes die Abhängigkeit der Anzahl notwendiger Kontrollstellen n-k (in der Literatustelle wird hierfür k verwendet) von der Codewortlänge n angegeben ist. Zu sehen ist, daß für eine festgehaltene Anzahl von n-k ≠ 1 Kontrollstellen mehrere Codewortlängen möglich sind. Die maximale Codewortlänge zu einer festgehaltenen Anzahl von n-k Kontrollstellen gibt die Codewortlänge zur Bildung eines vollständigen Codes an. Diese Codes können genau einen Einbitfehler korrigieren, darüber hinaus aber keine weiteren Fehler erkennen. Im dazugehörigen Text ist angegeben, welche Maßnahmen durchgeführt werden müssen, um darüber hinaus Zweibitfehler zu erkennen. Wird ausgehend vom vollständigen Code eine weitere Kontrollstelle angehängt, können über die Einbitfehlerkorrigierbarkeit hinaus alle Zweibitfehler im Codewort erkannt werden. Mit dieser Maßnahme wird aber gleichzeitig die Stufe erreicht, die zur festgehaltenen Anzahl von n-k + 1 Kontrollstellen die minimal mögliche Codeworktlänge angibt, ohne daß der Linearcode überbestimmt wird. Andererseits wird ausgehend vom vollständigen Code die Zweibitfehlererkennbarkeit auch dadurch erreicht, daß die Anzahl der Informationsstellen solange verringert wird, bis die zur festgehaltenen Anzahl von n-k Kontrollstellen minimale Codwortlänge erreicht ist. Bis diese Codewortlänge erreicht ist, ist die Zweibitfehlererkennbarkeit nur in entsprechend eingeschränktem Maße gegeben.

Aufgabe der Erfindung ist es, eine Sicherungseinrichtung zum Absichern von Daten in Speichereinheiten mit aus mehreren Speichermodulen zur Aufnahme einer Dateneinheit und zugehörigen Sicherungscode aufgebauten Speicherplätzen einer Datenverarbeitungsanlage anzugeben, die bei Verwendung eines Einbitfehler korrigierenden und Zweibitfehler erkennenden Sicherungscodes die einzelnen Speichermodule platzmäßig vollständig ausnützt. Ferner soll durch geeignete einfache Maßnahmen die Erhöhung der Mehrbitfehlererkennbarkeit erreicht werden können, und zwar so, daß ein Speichermodulausfall erkannt wird.

Diese Aufgabe wird durch die im kennzeichnenden Teil des Patentanspruches 1 angegebenen Merkmale gelöst. Die diese Merkmale aufweisende Sicherungseinrichtung nutzt dabei den Umstand aus, daß sich die durch die Verwendung eines verkürzten (12,8)-Codes ergebenden beschränkten Möglichkeiten, über die Korrektur von Einbitfehlern hinaus noch Zweibitfehler zu erkennen, genau mit der Anzahl möglicher Zweibitfehler innerhalb dreier vierbitstelliger Speichermodule für einen Speicherplatz decken. Bei geeigneter Bitverteilung innerhalb der Speichermodule sind mit dem angegebenen ECC-Code innerhalb der Speichermodule Einbitfehler korrigierbar und Zweibitfehler erkennbar. Die ein Codewort ausmachenden vier Kontrollbits und acht Informationsbits können in drei Gruppen von je vier Bitstellen unterteilt werden. Jede. Gruppe bildet eine datenverarbeitungstechnische Größe, so daß sie jeweils in einem Speicherbaustein entsprechender Breite gespeichert werden können. Ein Speicherplatz für ein Codewort erstreckt sich damit über drei Speicherbausteine (Speichermodule) deren Breite jeweils für sich vollständig ausgenutzt wird. Durch die jeweils vollständig ausgenutzten Speichermodule lassen sich beliebig große, immer voll ausgenutzte Speichereinheiten erstellen. Dabei können Speichermodule z.B. in ECL-Technik verwendet werden, die den Vorteil haben, besonders schnell zu sein. Weiter vorteilhaft ist, daß durch die Absicherung relativ kleiner Dateneinheiten bei Änderungen sich der zugehörige ECC-Code schneller wieder erzeugen läßt. Ein anderer Vorteil ergibt sich aus der Art, wie der ECC-Code gebildet wird. Danach wird eine Kontrollstelle abhängig von allen Informationsstellen der Dateneinheit bis auf eine gebildet. Wird zur Dateneinheit ein Paritätsbit mitgeliefert, kann das Kontrollbit in einfacher Weise durch eine einzige EXKLUSIV-ODER-Verknüpfung der Paritätsbit mit dem nicht verwendeten Informationsbit ermittelt werden. Umgekehrt kann aus dem Kontrollbit durch eine einzige EXKLUSIV-ODER-Verknüpfung wieder mit dem nicht verwendeten Informationsbit das Paritätsbit zurückgewonnen werden. Dadurch, daß das Paritätsbit in den Kontrollcode einbezogen wird, wird es durch den ECC-Code mitüberwacht. Es ist deshalb keine aufwendige Paritätsbitprüfung bei der Übergabe der zugehörigen Dateneinheit an die Speichereinheit erforderlich. Somit ist ein schneller Übergang von paritätsbitgesicherten zu ECC-Code-gesicherten Dateneinheiten und umgekehrt, zum Beispiel zwischen Zentraleinheit und Speichereinheit, sichergestellt. Die normale Paritätsbitsicherung erfährt hierdurch keine Verzögerung.

Durch Codeumschaltung bei der Bildung der Kontrollbits werden innerhalb eines Speichermoduls alle Einzel- und Mehrtitfehler bis hin zum Gesamtausfall eines Speichermoduls erkannt. Dies wird dadurch erreicht, daß beim umgeschalteten ECC-Code einzelne, durch den ECC-Code bedingte Fehlermeldungen doppelt verwendet werden. Besonders vorteilhaft ist es, wenn zwischen den verschiedenen ECC-Codes wahlweise umgeschaltet werden kann.

Zusammen mit einem speziellen Fehlerkorrekturverfahren ist es eingeschränkt möglich, auch Zweibitfehler, die durch den ECC-Code allein nicht korrigierbar sind, zu korrigieren.

Die Sicherungseinrichtung kann in einem LSI- Baustein untergebracht werden, der dem jeweiligen Speicherbaustein oder den jeweiligen Speicherbausteinen vorgeschaltet wird. Der LSI-Baustein kann für sich einfach geprüft werden, weil die notwendigen Testbitmuster direkt am Eingang angelegt und die Ergebnisse am Ausgang abgelesen werden können. Es ist aber auch die Flachbaugruppe mit den Speicherbausteinen einfach prüfbar, weil über die Steuerung eines speziellen internen Registers am Ausgang des LSI-Bausteins beliebige Ausgangssignale als Testbitmuster für die Speicherbausteine vorgebbar sind. Damit können die Speicherbausteine mit vorgegebenen Testbitmustern beschrieben werden, die nach dem Auslesen von derselben Sicherungseinrichtung durch Rückkopplung der Speicherbausteinausgänge an die LSI-Bausteineingänge geprüft werden können. Einzelheiten der Erfindung werden anhand der Zeichnung näher erläutert. Darin zeigt

FIG 1    ein Blockschaltbid eines Ausführungsbeispieles einer Sicherungseinrichtung gemäß der Erfindung

FIG 2    eine Tabelle mit nicht auftretenden Fehlermeldungen bei Verwendung ausgewählter Prüfmatrizen zur Kontrollcodebildung in einer Sicherungseinrichtung nach FIG 1,

FIG 3    eine Tabelle auftretender Fehlermeldungen bei Zweibitfehlern innerhalb eines Codewortes bei Verwendung einer ausgewählten Prüfmatrix aus den der in FIG 2 angegebenen Tabelle zugrundeliegenden Prüfmatrizen und

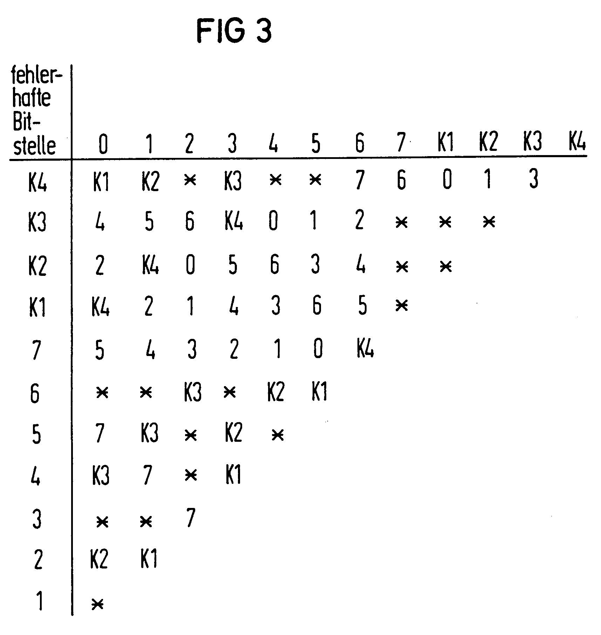

FI 4    eine Summentabelle bezüglich nicht erkannter Fehler bei Verwendung von Prüfmatrizen, die gegenüber der in FIG 3 verwendeten Prüfmatrix drei Fehlermeldungen doppelt verwenden.

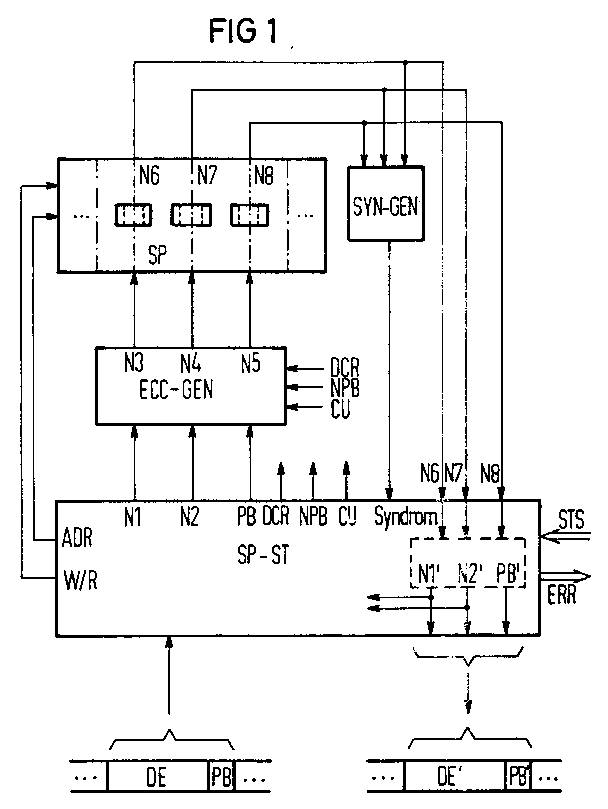

Die in FIG 1 für Speichereinheiten SP einer Datenverarbeitungsanlage angegebene Sicherungseinrichtung weist eine Speicher-Steuereinrichtung SP-ST, einen Kontrollcode-Generator ECC-GEN, kurz ECC-Generator und einen Syndrom-Generator SYN-GEN auf, wobei der Speicher SP aus vier-bit-stelligen RAM-Bausteinen aufgebaut ist. Die Sicherungseinrichtung ist nur für eine durch ein Paritätsbit PB gesicherte, bytegroße Dateneinheit DE angegeben. Für mehrere parallel angelierferte Dateneinheiten ist sie entsprechend zu erweitern.

Die Dateneinheit DE mit zugehörigem Paritätsbit PB wird von der Speicher-Steuereinheit SP-ST der Sicherungseinrichtung übernommen und dem ECC-Generator ECC-GEN über die vier-Bitstelligen Signalpfade N1 und N2 und über den ein-bitstelligen Signalpfad PB übergeben. Der ECC-Generator ermittelt aus den übergebenen Daten erfindungsgemäß die einzelnen Kontrollstellen des zur Dateneinheit DE gehörenden Kontrollcodes. Der Kontroll code umfaßt dabei vier Bitstellen. In einer vorteilhaften Ausgestaltung des ECC-Generators ECC-GEN kann der ECC-Generator einen zweiten Kontrollcode gemäß der Erfindung bilden. Die Auswahl zwischen den beiden Kontrollcodes wird durch ein Codeumschaltungsignal CU gesteuert. Aufgrund der Art wie die Kontrollcodes gebildet werden, können die Kontrollcodes wahlweise unter Verwendung des Paritätsbits PB oder rein aus den Informationsstellen der Dateneinheit DE ermittelt werden. Die Steuerung für die Auswahl hierfür erfolgt über das Steuersignal NPB. Damit sind auch Dateneinheiten, die nicht paritätsbitgesichert angelierfert werden, von der Sicherungseinrichtung verarbeitbar. Der Aufbau der der Bildung der Kontrollcodes zugrundeliegenden Prüfmatrizen wird an späterer Stelle erläutert.

Bevor der zu einer Dateneinheit DE gebildete Kontrollcode zusammen mit der Dateneinheit DE über die jeweils vier-bitstelligen Signalpfade N3, N4 und N5 an den Speicher SP weitergegeben wird, wird jede einzelne Kontrollstelle über eine Torschaltung geführt, die jeweils abhängig von dem Inhalt einer Registerstelle eines internen Registers gesteuert wird. Die Belegung des Registers geschieht über die Steuersignale DCR.

Der Speicher SP weist für je ein Codewort, bestehend aus der acht-bit-stelligen Dateneinheit DE und dem vier-bitstelligen Kontrollcode, drei vier-bitstellige Speichermodule auf, die zusammen einen Speicherplatz bilden. Die Auswahl des Speicherplatzes und die Festlegung der Zugriffsart erfolgt von der Speicher-Steuereinrichtung SP-ST aus über die Adressenleitungen ADR und die Steuerleitung W/R. Innerhalb der drei Speichermodule erfolgt die Abspeicherung eines Codewortes mit der Bitverteilung gemäß der Erfindung. Auf die Herleitung der Bitverteilung wird an späterer Stelle eingegangen.

Wird aus dem Speicher SP ein Codewort ausgelesen, gelangt es über die vier-bit-stelligen Leitungspfade N6, N7 und N8 in den Syndrom-Generator SYN-GEN und in die Speicher-Steuereinrichtung SP-ST. Der Syndromgenerator ermittelt aus der ihm angebotenen Dateneinheit erneut den Kontrollcode und vergleicht ihn mit dem Ausgelesenen. In Abhängigkeit vom Vergleich erzeugt er eine fehlerspezifische Syndrommeldung. Die Syndrommeldung wird ebenfalls an die Speicher-Steuereinrichtung SP-ST weitergegeben.

Die Speicher-Steuereinrichtung SP-ST wertet unter Berücksichtigung des im ECC-Generator erzeugten Kontrollcodes die Syndrommeldung aus. Zeigt die Syndrommeldung, die dem Syndromvektor S entspricht, keinen Fehler an, ermittelt sie aus den über die vier-bitstelligen Leitungspfade N6, N7 und N8 mit bekannter Bitverteilung ankommenden Daten die Informationsstellen und bildet die Dateneinheit DE$'$, die der ursprünglichen Dateneinheit DE entspricht. Außerdem ermittelt sie aus den geeigneten Kontrollstellen das zugehörige Paritätsbit PB$'$, das dem ursprünglichen Paritätsbit PB entspricht. Die Dateneinheit DE$'$ und das Paritätsbit PB$'$ werden über die vier-bitstelligen Leitungspfade N1$'$ und N2$'$, sowie über den Leitungspfad PB$'$ in der der Sicherungseinrichtung anfänglich übergebenen Form ausgegeben.

Wird durch die Syndrommeldung der Speicher-Steuereinrichtung SP-ST ein Fehler signalisiert, hängen die folgenden Tätigkeiten von dem der Dateneinheit zugrundegelegten Kontrollcode ab. Wenn ein Einbitfehler gemeldet ist, und der Kontrollcode die Korrektur von Einbitfehlern zuläßt, wird der Fehler in den gelesenen Daten von der Speicher-Steuereinrichtung SP-ST korrigiert und die Daten anschließend in der bereits bekannten Form ausgegegeben.

In allen anderen Fällen erzeugt die Speicher-Steuereinrichtung SP-ST Signale ERR, die es anderen Steuereinheiten erlauben Entscheidungen zu treffen, die ihr über die Steuerleitungen STS mitgeteilt werden. Mögliche Entscheidungen dabei sind, die Daten erneut auszulesen oder, wenn es sich bei dem verwendeten Kontrollcode um den Einbitfehler korrigierenden Kontrollcode handelt, mittels eines speziellen, später erläuterten Fehlerkorrekturverfahrens den Fehler zu korrigieren versuchen. In diesem Fall wirkt die Speicher-Steuereinrichtung SP-ST als Fehlerkorrektureinrichtung. Dabei gibt sie die für die Ausgabe aufbereitete Dateneinheit DE$'$ nicht sofort über die vier-bitstelligen Signalpfade N1$'$ und N2$'$ aus, sondern leitet sie nochmals über die Signalpfade N1 und N2 dem ECC-Generator ECC-GEN zu. Mit der hier beschriebenen Sicherungseinrichtung in Verbindung mit einem speziellen Fehlerkorrekturverfahren sind Mehrbitfehler korrigierbar, wenn diese Fehler bestimmte Voraussetzungen erfüllen. Dabei benötigt der ECC-Generator ECC-GEN Informationen bezüglich der Einstellung des internen Registers, die ihm von der Speicher-Steuereinrichtung SP-ST über die Steuersignale DCR mitgeteilt werden. Daneben erzeugt die Speicher-Steuereinrichtung SP-ST bei Bedarf auch die Steuersignale NPB und CU für den ECC-Generator ECC-GEN.

Die Erzeugung des zu einer gegebenen Dateneinheit mit den Datenbitstellen M7 bis M0 gehörenden Kontrollcodes mit den Kontrollbitstellen K4 bis K1 im ECC-Generator ECC-GEN erfolgt für jede einzelne Kontrollbitstelle durch EXKLUSIV-ODER-Verknüpfung fest vorgegebener Bitstellen der Dateneinheit. Die Zuordnung der Bitstellen M7 bis M0 zu den Kontrollbitstellen K4 bis K1 sind dabei der Kontrollcodebildung zugrundegelegten Prüfmztrix P zu entnehmen, auf die nachfolgend eingegangen wird.

Der Kontrollcode und die Dateneinheit bilden zusammen ein 12-bitstelliges Codewort eines sogenannten (12,8)-Linearcodes. Dieser ist durch die Basismatrix

$$G = [J_k \; P]$$

die eine (8,8)-reihige Einheitsmatrix $J_k$ und eine (8,4)-reihige Prüfmatrix aufweist, hinreichend beschrieben. Für das beschriebene Ausführungsbeispiel lautet diese:

$$G = \begin{bmatrix} 1 & & & & & & & 0 & 1 & 1 & 1 \\ & 1 & & & & & & 1 & 1 & 1 & 1 \\ & & 1 & & & \emptyset & & 1 & 1 & 1 & 0 \\ & & & 1 & & & & 1 & 1 & 0 & 1 \\ & & & & 1 & & & 1 & 1 & 0 & 0 \\ & \emptyset & & & & 1 & & 1 & 0 & 1 & 1 \\ & & & & & & 1 & 1 & 0 & 1 & 0 \\ & & & & & & & 1 & 1 & 0 & 0 & 1 \end{bmatrix}$$

Dabei setzt sich die Prüfmatrix

$$P = P1 + P2$$

aus einer ersten und einer zweiten Teilprüfmatrix P1 und P2 zusammen. Mittels der Teilprüfmatrix P2 wird eine Codeumschaltung CU ausgeführt, indem der Teilprüfmatrix P1 eine von der Nullmatrix N verschiedene Matrix überlagert wird. Zunächst wird aber angenommen, daß die Teilprüfmatrix

$$P2 = N$$

die Nullmatrix ist. Die Prüfmatrix

$$P = P1 + N = P1$$

ergibt sich dann zur Teilprüfmatrix P1, mit

$$P1 = \begin{array}{c} \\ Z7 \\ \\ \\ \\ \\ \\ \\ Z0 \end{array} \begin{array}{c} \overset{\text{S4...S1}}{\begin{bmatrix} 0 & 1 & 1 & 1 \\ 1 & 1 & 1 & 1 \\ 1 & 1 & 1 & 0 \\ 1 & 1 & 0 & 1 \\ 1 & 1 & 0 & 0 \\ 1 & 0 & 1 & 1 \\ 1 & 0 & 1 & 0 \\ 1 & 0 & 0 & 1 \end{bmatrix}} \end{array} \qquad \text{und } P2 = \begin{array}{c} \\ Z7 \\ \\ \\ \\ \\ \\ \\ Z0 \end{array} \begin{array}{c} \overset{\text{S4...S1}}{\begin{bmatrix} 0 & 0 & 0 & 0 \\ 0 & 0 & 0 & 0 \\ 0 & 0 & 0 & 0 \\ 0 & 0 & 0 & 0 \\ 0 & 0 & 0 & 0 \\ 0 & 0 & 0 & 0 \\ 0 & 0 & 0 & 0 \\ 0 & 0 & 0 & 0 \end{bmatrix}} \end{array}$$

Die Teilprüfmatrix P1 mit den Spaltenvektoren S4 bis S1 und den Zeilenvektoren Z7 bis Z0 beinhaltet die indexgleiche in der Matrix durch 1-Elemente gekennzeichnete Zuordnung der Bitstellen der Dateneinheit M7 bis M0 zu den einzelnen Kontrollbitstellen K4 bis K1. Ein 1-Element in der Teilprüfmatrix P1 zeigt an, daß die dieser Zeile zugeordnete Bitstelle der Dateneinheit einen Beitrag zur Bildung der der Spalte zugeordneten Kontrolstelle leistet. Jeweils eine Zeile der Prüfmatrix P1 stellt eine Fehlermeldung der durch die Kontrollstellen darstellbaren Fehlermeldungen dar. Alle Zeilen zusammen bilden eine Teilmenge aller möglichen Fehlermeldungen. Gemäß der einschlägigen Literatur [2] und [3] enthält diese Teilmenge nur solche Fehlermeldungen, die nicht genau ein 1-Element oder nur 0-Elemente aufweisen. Diese Fehlermeldungen sind für die Anzeige eines Einbitfehlers des durch die Position des 1-Elementes gekennzeichneten Kontrollbits, bzw. für die Anzeige, daß kein Fehler aufgetreten ist, bestimmt. In hexadezimaler Schreibweise sind dies die Fehlermeldungen 1, 2, 4, 8 und 0. Damit kann aus den einzelnen Spalten der Teilprüfmatrix P1 unmittelbar das Bildungsgesetz für die einzelne Kontrollbitstelle angegeben werden. Gemäß dem

Ausführungsbeispiel lauten diese:

$$K1 = M0 \# \quad M2 \# \quad M4 \# \quad M6 \# \quad M7$$
$$K2 = \quad M1 \# M2 \# \quad M5 \# M6 \# \quad M7$$
$$K3 = \quad M3 \# M4 \# M5 \# M6 \# \quad M7$$
$$K4 = M0 \# M1 \# M2 \# M3 \# M4 \# M5 \# M6$$

Für die Auswahl von acht Fehlermeldungen zur Anzeige eines Einbitfehlers innerhalb einer Dateneinheit gemäß dem Ausführungsbeispiel stehen 11 von den durch vier Kontrollbitstellen darstellbaren 16 Fehlermeldungen frei zur Verfügung. Anders ausgedrückt gibt es drei Fehlermeldungen, die für die Anzeige von Mehrbitfehlern verwendet werden können. Dabei sind insbesondere Zweibitfehler von Interesse, da die Auftrittswahrscheinlichkeit von Zweibitfehlern, entsprechend stochastischer Gesetze, am größten ist. Zur Aufstellung der Prüfmatrix P1 muß deshalb eine Auswahl der Fehlermeldungen gemäß der Erfindung getroffen werden. Folgende Kriterien sind zu berücksichtigen: Der Kontrollcode soll möglichst schnell gebildet werden können und es sollen durch ihn möglichst viele Zweibitfehler neben der Einbitfehler-Korrigierbarkeit hinaus erkennbar sein. Der Kontrollcode kann schnell gebildet werden, wenn auf die Paritätsbitprüfung bzw. auf die Paritätsbitgenerierung nach bekanntem Muster bei den Übergängen von paritätsbitgesicherten zu kontrollcodegesicherten Daten und umgekehrt verzichtet werden kann und die einzelnen Kontrollbits von möglichst wenigen Datenbitstellen abhängig sind, weil dann der Kontrollcode mit wenigen logischen Verknüpfungen gebildet werden kann. Dies wird durch eine Auswahl von Fehlermeldungen erreicht, aufgrund derer in einer Spalte der Prüfmatrix P1 möglichst viele, das heißt genau sieben 1-Elemente zu stehen kommen. Dies ist möglich, da ein vierbitstelliger Code pro Spalte acht 1-Elemente aufweist, wobei ein 1-Element pro Spalte gemäß den oben gemachten Ausführungen für die Anzeige eines Einbitfehlers des der Spalte zugeordneten Kontrollbits wegfällt. Das der Spalte mit den sieben 1-Elementen zugeordnete Kontrollbit kann dann auch dadurch gebildet werden, daß das zu einer Dateneinheit zugehörige Paritätsbit PB mit den den durch die 1-Elemente gekennzeichneten Zeilen zugeordnete Datenbitstellen EXKLUSIV-ODER verknüpft wird, gemäß der Beziehung:

$$K4 = PB \# M7$$

Durch Vertauschen des Paritätsbits PB mit dem Ergebnissignal dieser EXKLUSIV-ODER-Verknüpfung, entsprechend der Beziehung

$$PB' = K4 \# M7$$

kann umgekehrt das Paritätsbit PB' aus den ECC-Code-gesicherten Daten genauso schnell wieder gewonnen werden.

In dem der Beschreibung zugrunde gelegten Ausführungsbeispiel ist die Auswahl der Fehlermeldungen so getroffen, daß die der Kontrollbitstelle K4 zugeordnete Spalte S4 die sieben 1-Elemente aufweist. Es hätte aber auch für jede andere Spalte die Auswahl getroffen werden können. Damit stehen für die Auswahl der acht Fehlermeldungen für die Prüfmatrix P1 aus den 11 möglichen Fehlermeldungen sieben fest. Es sind dies die hexadezimalen Fehlermeldungen F, E, D, C, B, A und 9, die, zum Beispiel in dieser Reihenfolge, die Zeilen Z6 bis Z0 der Prüfmatrix P1 bilden. Für die achte Fehlermeldung ist noch eine der vier hexadezimalen Fehlermeldungen 3, 5,6 oder 7 möglich. Die Wahl hängt davon ab, mit welcher achten Fehlermeldung der die meisten Zweibitfehler erkennende Kontrollcode entsteht. Diese Frage wird beantwortet durch die Beantwortung der Frage, welche drei in der Prüfmatrix P1 nicht benutzten Fehlermeldungen mittels des jeweils entstehenden Kontrollcodes am häufigsten durch Auftreten der nicht benutzten Fehlermeldungen Mehrbitfehler, besonders aber Zweibitfehler, melden. Unter Zugrundelegung der Nullmeldung für die Anzeige, daß kein Fehler aufgetreten ist, gibt es $\binom{15}{3} = 455$ Möglichkeiten, drei freie Fehlermeldungen bei einem Vier-Bit-Kontrollcode auszuwählen.

Die Simulation aller dieser Möglichkeiten mittels eines Rechners, bei gleichzeitigem Einbau aller Ein-, Zwei-, Drei- und Vierbitfehler in das jeweils mit dem entstehenden Kontrollcode abgesicherte Codewort, liefert zusammengefaßt als Ergebnis, daß in 420 Fällen alle Ein- und Zweibitfehler erkannt, 55 Drei- und Vierbitfehler nicht erkannt und 15 Zweibitfehler über die drei freien Fehlermeldungen erkannt werden. In den restlichen 35 Fällen werden alle Ein- und Zweibitfehler erkannt, 55 Drei- und Vierbitfehler nicht erkannt, aber 18 Zweibitfehler mittels der freien Fehlermeldungen erkannt. Gegenüberstellend werden in beiden Gruppen Mehrbitfehler gleich oft, bei der Gruppe der restlichen 35 Fälle aber mehr Zweibitfehler erkannt.

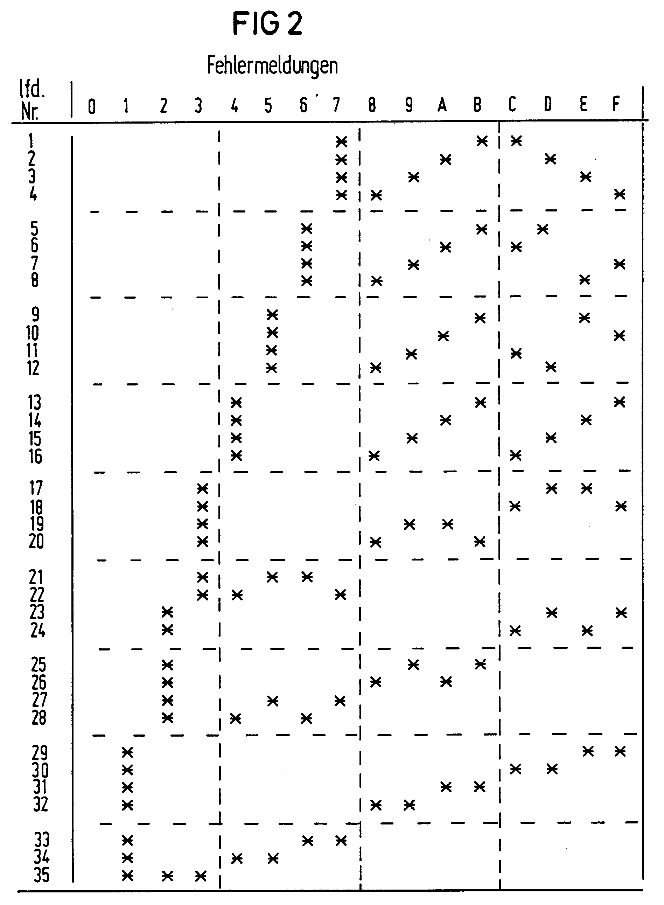

FIG 2 zeigt in einer Tabelle die 35 Fälle, in denen 18 Zweibitfehler mittels der drei freien Fehlermeldungen erkannt werden. Die pro Zeile mit einem Stern gekennzeichneten hexadezimal dargestellten Fehlermeldungen geben dabei die für diese Fälle ausgewählten freien Fehlermeldungen an. Aus bereits erwähnten Gründen fallen alle Fälle, die wenigstens eine der hexadezimalen Fehlermeldungen 1, 2, 4, 8 oder 0 als freie Fehlermeldung verwenden, weg. Ferner fallen alle diejenigen Fälle, die wenigstens eine der sieben für die Prüfmatrix P1 bereits ausgewählten Fehlermeldungen verwenden, weg. Übrig bleibt der mit der Nummer 21 bezeichnete Fall, der alle vorgegebenen Bedingungen erfüllt. Die in diesem Fall verwendeten freien Fehlermeldungen, es sind dies die hexadezimalen Fehlermeldungen 3, 5 und 6, sind in den vier Fehlermeldungen, die die Prüfmatrix P1 als achte Fehlermeldung vervollständigen könnten, enthalten. Damit steht die achte, die Prüfmatrix P1 vervollständigende Fehlermeldung fest. Es ist die nach Abzug der drei in FIG 2 unter der Nummer 21 angegebenen freien Fehlermeldungen von den vier noch möglichen Fehlermeldungen verbleibende Fehlermeldung 7. Im beschriebenen Ausführungsbeispiel bildet diese Fehlermeldung die Zeile Z7 der Prüfmatrix P1.

Alle bisherigen Überlegungen sind analog anzuwenden, wenn anstelle des Kontrollbits K4 ein anderes Kontrollbit in verbindung mit dem Paritätsbit verwendet wird, was praktisch nur einer Spaltenvertauschung in der Prüfmatrix P1 entspricht.

Die Tatsache, daß bei Auswahl dreier Fehlermeldungen gemäß der gemachten Erläuterungen genau 18 Zweibitfehler mittels der freien Fehlermeldungen angezeigt werden, läßt sich vorteilhaft mit der Tatsache verbinden, daß in drei vierbitstelligen Datengruppen GR1 bis GR3 genau nur 18 Zweibitfehler, nämlich drei mal sechs, möglich sind.

FIG 3 zeigt eine zweidimensionale Tabelle mit den auftretenden Fehlermeldungen in den Kreuzungspunkten zweier fehlerhafter Bitstellen eines Codewortes, dessen Dateneinheit mit einem Kontrollcode abgesichert ist, dem die Prüfmatrix P1 zugrunde liegt. Die Bitpaare, die in ihren Kreuzungspunkten mit Stern gekennzeichnet sind, sind diejenigen, die im Fehlerfall eine der drei freien Fehlermeldungen erzeugen. Bei geeigneter Aufteilung der betreffenden Bitstellen eines Codewortes auf drei vierbitstellige Speichermodule, lassen sich alle betreffenden Bitpaare jeweils innerhalb eines Speichermodules unterbringen. Die Aufteilung sieht wie folgt aus:

GR1 = {M0, M1, M3, M6}
GR1 = {M2, M4, M5, K4}
GR3 = {M7, K1, K2, K3}
Die Bitverteilung innerhalb eines Speichermoduls ist dabei beliebig.

Die Zeilen der Prüfmatrix P1 sind beliebig vertauschbar. Dadurch ändert sich lediglich die Zuordnung der einzelnen Datenbitstellen M7 bis M0 untereinander, nicht aber die Bildungsgesetze für die Kontrollbits K4 bis K1. Bei Vertauschung der Zeilen in der Prüfmatrix P1 sind die entsprechenden Datenbitstellen in den Speichermodulen GR1 bis GR3 gleichermaßen zu vertauschen. Prinzipiell sind auch die Spalten der Prüfmatrix P1 beliebig vertauschbar. In diesem Fall ändern sich zu den Zuordnungen der Spalten zu den Kontrollbitstellen auch die Zuordnung der Zeilen zu den Datenbitstellen. In den Speichermodulen GR1 bis GR3 sind deshalb die betreffenden Kontrollbitstellen und die betreffenden Datenbitstellen entsprechend zu vertauschen.

Dient der gemäß der Prüfmatrix P1 gebildete Kontrollcode der Fehlererkennung, erkennt dieser kontrollcode 55 Mehrbitfehler aller in einem Codewort möglichen Ein- bis Vierbitfehler nicht, wobei auch einige Drei- und Vierbitfehler innerhalb eines einzelnen Speichermoduls nicht erkannt werden. Durch Überlagern einer geeigneten, von der Nullmatrix N verschiedenen Teilprüfmatrix P2 = P2* auf die bereits beschriebene Teilprüfmatrix P1, so daß dem dann entstehenden Kontrollcode die Prüfmatrix

$$P^* = P1 + P2^*$$

zugrundeliegt, wird die Fehlererkennbarkeit durch Mehrfachverwendung einzelner Fehlermeldungen erhöht. Der Überlagerungsoperator entspricht dabei der Modulo-2-Addition der Teilprüfmatrizen P1 und P2*. Wird die Teilprüfmatrix P2 = P2* zu

$$P2^* \;=\; \begin{bmatrix} 1 & 0 & 0 & 0 \\ 0 & 0 & 0 & 0 \\ 0 & 0 & 0 & 1 \\ 0 & 0 & 0 & 0 \\ 0 & 1 & 0 & 0 \\ 0 & 0 & 0 & 0 \\ 0 & 0 & 0 & 0 \\ 0 & 0 & 0 & 0 \end{bmatrix}$$

gewählt, erkennt der dann entstehende Kontrollcode 43 Mehrbitfehler nicht, wobei innerhalb eines Speichermoduls alle Ein-bis Vierbitfehler und damit auch Gesamtausfälle einzelner Speichermodule erkannt werden. Die Teilprüfmatrix P2* erhöht die Anzahl freier Fehlermeldungen auf insgesamt sechs. Damit gibt es für die Auswahl der drei zusätzlichen gegenüber den bereits drei vorhandenen freien Fehlermeldungen

$\binom{15}{6} \bullet \binom{11}{3} = 825\,825$

Möglichkeiten. Werden alle diese Möglichkeiten von einer Datenverarbeitungsanlage simuliert, wobei zu jeder Möglichkeit alle Ein- bis Vierbitfehler in ein Codewort eingebaut werden, kann eine Tabelle erstellt werden, die zeigt, bei welchen Möglichkeiten welche Fehler nicht erkannt werden.

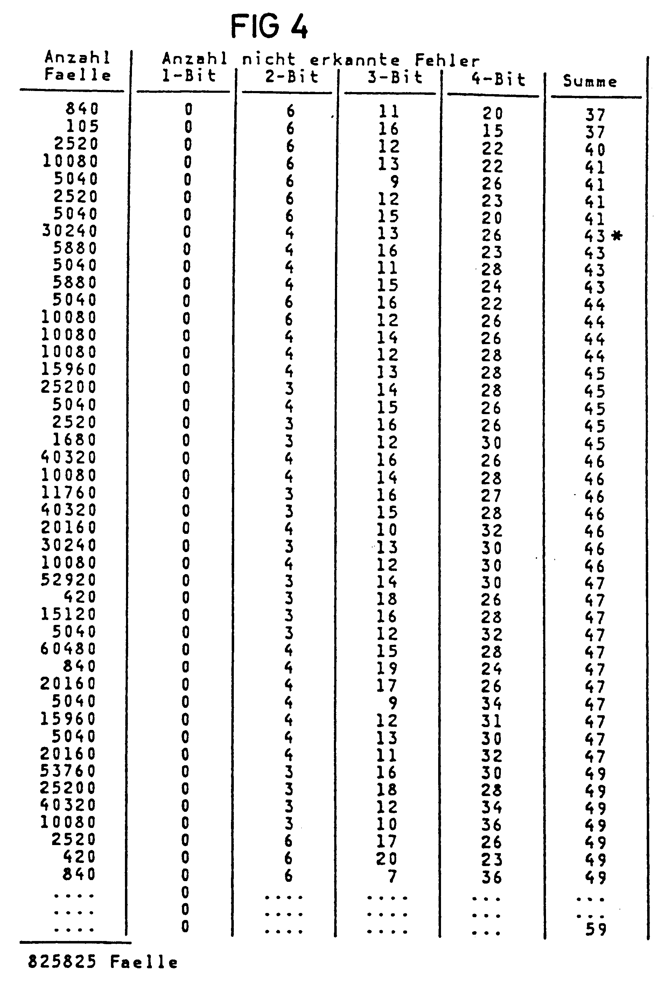

In FIG 4 ist eine Tabelle dargestellt, in der alle Möglichkeiten, die zu den gleichen Ergebnissen führen, zusammengefaßt sind. Die oben angegebene Teilprüfmatrix P2* ist eine aus der mit * gekennzeichneten Gruppe enttnommene Möglichkeit. Laut Tabelle gibt es Gruppen, die noch weniger Mehrbitfehler nicht erkennen, doch ist die Fehlererkennbarkeit von Zweibitfehlern erheblich schlechter. Durch die gewählte Teilprüfmatrix P2* ergeben sich die neuen Bildungsgesetze für die Kontrollbits zu

K1* = K1 # M5
K2* = K2
K3* = K3 # M3
K4* = K4 # M7

Die Hinzunahme der Informationsstellen M7, M5 und M3 zu den bekannten Bildungsgesetzen bedeutet schaltungstechnisch keinen besonderen Aufwand. Zu beachten ist, daß während der Codeumschaltung die Informationsstellen M7, M5 und M3 den logischen Wert Null aufweisen, da sonst fälschlicherweise eine Fehlermeldung entsteht.

Die Speicher-Steuereinrichtung SP-ST kann ein Fehlerkorrekturverfahren ausführen, durch das ein bestimmte Voraussetzungen erfüllender Zweibitfehler korrigierbar ist, obwohl der Kontrollcode vom Prinzip her "nur" die Korrektur von Einbitfehlern und die Erkennung von Zweibitfehlern zuläßt. Die Voraussetzung ist, daß es sich um einen statischen und um einen sporadischen Fehler innerhalb eines Codewortes handelt. Für den Ablauf des Fehlerkorrekturverfahrens ist die Einflußnahme auf die Bildung des durch den ECC-Generator ECC-GEN gebildeten Kontrollcodes notwendig. Dies geschieht dadurch, daß die endgültige Ausgabe des Kontrollcodes durch den ECC-Generator in Abhängigkeit vom Inhalt eines internen Registers erfolgt, das im folgenden wegen seiner DCR-Steuersignale DCR-Register genannt wird. Das Fehlerkorrekturverfahren weist folgende Verfahrensschritte auf.

1. Lesen der fehlerhaften Dateneinheit mit zugehörigem Kontrollcode und Merken des Kontrollcodes.

2. Invertieren der gelesenen Dateneinheit mit zugehörigem Kontrollcode und Zurückschreiben der invertierten Dateneinheit in dieselbe Speicherstelle, wobei der Kontrollcode entsprechend der invertierten Dateneinheit invertiert gebildet und abgespeichert wird.

3. Erneut Lesen und Invertieren der im zweiten Verfahrensschritt zurückgeschriebenen Dateneinheit mit zugehörigem Kontrollcode.

4. Die erneut invertierte Dateneinheit in eine neue Speicherstelle schreiben, wobei ein neuer Kontrollcode gebildet und abgespeichert wird.

5. Erneut Lesen der in die neue Speicherstelle geschriebenen Dateneinheit mit zugehörigem Kontrollcode, Vergleich des neuen Kontrollcodes mit dem am Anfang gemerkten Kontrollcode und abhängig vom Vergleich das DCR-Register so einstellen, daß beim Zurückschreiben der Dateneinheit der dabei gebildete Kontrollcode mit dem am Anfang gemerkten Kontrollcode übereinstimmt.

6. Zurückschreiben der im 5.Verfahrensschritt aus der neuen Speicherstelle ausgelesenen Dateneinheit in die im 4.Verfahrensschritt verwendete neue Speicherstelle, wobei der Kontrollcode gemäß dem 5.Verfahrensschritt gebildet und abgespeichert wird.

7. Erneut Lesen der im 6.Verfahrensschritt zurückgeschriebenen Dateneinheit mit zugehörigem Kontrollcode und hardwaremäßig den noch verbliebenen Einbitfehler korrigieren.

Bei dem angegebenen Mehrbitfehler-Korrekturverfahren wird bis zum dritten Verfahrensschritt der statische Fehler und bis zum siebten Verfahrensschritt der sporadische Fehler korrigiert. Die hardwaremäßige Lösung der Fehlerkorrektur mittels einer DCR-Registereinstellung hat den Vorteil, daß keine durch zum Beispiel Firmware gesteuerte Routine angestoßen werden muß, die wesentlich mehr Zeit in Anspruch nimmt, sondern der Fehler praktisch unmittelbar vor dem Ausgeben der Dateneinheit aus der Speichereinrichtung beim Durchlauf einer geeigneten Hardware korrigiert wird.

Zur Prüfung der die Speicherbausteine aufzuweisenden Flachbaugruppen mittels der die Sicherungseinrichtung gemäß der Erfindung aufweisenden LSI-Bausteine, weist der LSI-Baustein zusätzliche externe Steuersignaleingänge auf, über die das DCR-Register extern ansteuerbar ist. Ferner weist er einen weiteren Steuersignaleingang auf, der der Sicherungseinrichtung anzeigt, daß die externen Steuersignale an den genannten Eingängen für das DCR-Register maßgebend sind. Zur Prüfung der Flachbaugruppe werden dann an den Ausgängen der LSI-Bausteine vorgegebene Testbitmuster erzeugt und in die Speicherbausteine eingelesen. Anschließend werden die gespeicherten Daten ausgelesen und der jeweiligen Sicherungseinrichtung zur Überprüfung übermittelt.

**Patentansprüche**

1. Sicherungseinrichtung zum Absichern von Daten in Speichereinheiten mit wahlweisem Zugriff, wobei die Dateneinheiten mit zugehörigem Kontrollcode auf mehrere parallel ansteuerbare Speichermodule verteilt gespeichert werden, bestehend aus einem Kontrollcode-Generator (ECC-GEN) zur Erzeugung des jeweiligen Kontrollcodes, einem Syndrom-Generator (SYN-GEN) zur Überwachung der gespeicherten Dateneinheiten und einer Fehlerkorrektureinrichtung, wobei das aus zu sichernder Dateneinheit und Kontrollcode jeweils gebildete Codewort einem (n,k) - Linearcode mit insgesamt n = 12 Bitstellen bei n - k = 4 Kontrollbits (k4 bis k1) und k = 8 Datenbits (M7 bis M0) entspricht, der durch eine Menge linear unabhängiger Basisvektoron bestimmt ist, die als Zeilen eine Basismatrix

$G = [J_k \; P]$

bilden, die wiederum aus einer (k,k)-reihigen Einheitsmatrix ($J_k$) und einer (k, n - k)-reihigen Prüfmatrix (P) zusammengesetzt ist, **dadurch gekennzeichnet,** daß die 12 Bits eines Codewortes jeweils drei gleich große Bitgruppen (GR1 bis GR3) mit je vier Bits entsprechend der jeweiligen Breite eines Speichermodules bilden, daß ausgehend vom normalen Aufbau eines Codewortes der Form

M7, ..., M0, K4, ..., K1

für die Bildung der Kontrollbits (K4 bis K1) jeweils eine logische Verknüpfungsschaltung vorgesehen ist, die entsprechend der nach folgendem Schema gebildeten Prüfmatrix

$P = P1 \; + \; P2$

mit der ersten Teilprüfmatrix

$$P1 = \begin{array}{c} \\ Z7 \\ \\ . \\ . \\ . \\ \\ \\ Z0 \end{array} \begin{array}{cccc} S4...S1 \\ \begin{bmatrix} 0 & 1 & 1 & 1 \\ 1 & 1 & 1 & 1 \\ 1 & 1 & 1 & 0 \\ 1 & 1 & 0 & 1 \\ 1 & 1 & 0 & 0 \\ 1 & 0 & 1 & 1 \\ 1 & 0 & 1 & 0 \\ 1 & 0 & 0 & 1 \end{bmatrix} \end{array}$$

unter Zugrundelegung der Zuordnung der Zeilenvektoren (Z7 bis Z0) zu den Datenbits (M...) und der Spaltenvektoren (S4 bis S1) zu den Kontrollbits (K...) mit jeweils gleichem Index (7 bis 0 bzw. 4 bis 1) bzw. mit der zeilen- und spaltenweise entsprechend abgeänderten ersten Teilprüfmatrix P1 bei nicht indexgleicher Zuordnung der Zeilen- und Spaltenvektoren zu den Daten- und Kontrollbits und der auf die erste Teilprüfmatrix P1 modulo-2-addierten zweiten Teilprüfmatrix

P2 = N

mit N als Nullmatrix arbeitet, und daß die abzuspeichernden einzelnen Bitgruppen (GR1 bis GR3) ausgehend von einer indexgleichen Zuordnung nach dem Schema

GR1 = {M0, M1, M3, M6}

GR2 = {M2, M4, M5, K4}

GR3 = {M7, K1, K2, K3}

aus den vorhandenen Daten- und Kontrollbits (M7 bis M0 und K4 bis K1) gebildet sind, wobei innerhalb jeder Bitgruppe die Reihenfolge der angeführten Daten- und Kontrollbits beliebig wählbar ist.

2. Sicherungseinrichtung nach Anspruch 1, **dadurch gekennzeichnet,** daß die logische Verknüpfungsschaltung zur Bildung der Kontrollbits entsprechend einer von der Nullmatrix N abweichenden zusätzlichen zweiten Teilprüfmatrix P2 = P2$^*$ zur Erhöhung des Grades der Fehlererkennbarkeit umschaltbar ist.

3. Sicherungseinrichtung nach Anspruch 2, **dadurch gekennzeichnet,** daß die zusätzliche zweite Teilprüfmatrix unter Zugrundelegung einer indexgleichen Zuordnung folgende Form aufweist:

$$P2 = P2^* = \begin{bmatrix} 1 & 0 & 0 & 0 \\ 0 & 0 & 0 & 0 \\ 0 & 0 & 0 & 1 \\ 0 & 0 & 0 & 0 \\ 0 & 1 & 0 & 0 \\ 0 & 0 & 0 & 0 \\ 0 & 0 & 0 & 0 \\ 0 & 0 & 0 & 0 \end{bmatrix} .$$

4. Sicherungseinrichtung nach Anspruch 1 für Dateneinheiten, die mit einem Paritätsbit gesichert bereitgestellt werden oder weiterzuleiten sind, **dadurch gekennzeichnet,** daß entsprechend der ersten Teilprüfmatrix P1 das durch den nur ein Nullelement aufweisenden Spaltenvektor (S4) gekennzeichnete

EP 0 294 678 B1

Kontrollbit (K4) durch eine Exklusiv-ODER-Verknüpfung des jeweils angelieferten Paritätsbits (PB) mit dem, dem das Nullelement aufweisenden Zeilenvektor (Z7) zugeordneten Datenbit (M7) nach der Beziehung

$$K4 = PB \# M7$$

gebildet wird, und daß das für die Weiterleitung einer Dateneinheit jeweils benötigte Paritätsbit (PB') in entsprechender Weise nach der Beziehung

$$PB' = K4 \# M7$$

gebildet wird.

**Claims**

1. Error control device for the protection of data in memory units with random access, in which the data units are stored with associated control code distributed to a plurality of memory modules that can be driven in parallel, consisting of a control code generator (ECC-GEN) for generating the respective control code, a syndrome generator (SYN-GEN) for monitoring the stored data units and an error correcting device, the code word formed from the data unit to be protected and control code in each case corresponding to an (n, k) linear code with a total of n = 12 bit positions where n - k = 4 control bits (k4 to k1) and k = 8 data bits (M7 to M0), which is determined by a set of linear independent basic vectors which form as rows a basic matrix
$G = [J_k \, P]$
which in turn is composed of a (k, k)-row unit matrix ($J_k$) and a (k, n - k)-row test matrix (P), characterised in that the 12 bits of a code word form in each case three bit groups (GR1 to GR3) of identical size each having four bits in accordance with the respective width of a memory module, in that, starting from the normal structure of a code word having the form
M7, ..., M0, K4, ..., K1
in each case one logic gating circuit is provided for the formation of the control bits (K4 to K1), which circuit operates in accordance with the test matrix formed according to the following scheme

$$P = P1 + P2$$

with the first test submatrix

$$
P1 = 
\begin{array}{c}
Z7 \\
\\
\cdot \\
\cdot \\
\cdot \\
\\
\\
Z0
\end{array}
\quad
\begin{array}{c}
S4 \ldots S1 \\
\left[
\begin{array}{cccc}
0 & 1 & 1 & 1 \\
1 & 1 & 1 & 1 \\
1 & 1 & 1 & 0 \\
1 & 1 & 0 & 1 \\
1 & 1 & 0 & 0 \\
1 & 0 & 1 & 1 \\
1 & 0 & 1 & 0 \\
1 & 0 & 0 & 1
\end{array}
\right]
\end{array}
$$

based on the assignment of the row vectors (Z7 to Z0) to the data bits (M...) and the column vectors (S4 to S1) to the control bits (K...) having in each case the same index (7 to 0 and 4 to 1, respectively) or, in the case of non-index-equivalent assignment of the row and column vectors to the data and control bits, with the first test submatrix P1 modified accordingly with respect to rows and columns, and the second test submatrix
P2 = N,

12

modulo-2-added to the first test submatrix P1, where N is a zero matrix, and in that, starting from an index-equivalent assignment according to the scheme

GR1 = {M0, M1, M3, M6}

GR2 = {M2, M4, M5, K4}

GR3 = {M7, K1, K2, K3},

the individual bit groups (GR1 to GR3) to be stored are formed from the existing data and control bits (M7 to M0 and K4 to K1), it being possible to select arbitrarily the sequence of the data and control bits stated within each bit group.

2. Error control device according to Claim 1, characterised in that the logic gating circuit for forming the control bits can be switched over in accordance with an additional second test submatrix $P2 = P2^*$ deviating from the zero matrix N to increase the degree of error detection capability.

3. Error control device according to Claim 2, characterised in that, based on an index-equivalent assignment, the additional second test submatrix has the following form:

$$P2 = P2^* = \begin{bmatrix} 1 & 0 & 0 & 0 \\ 0 & 0 & 0 & 0 \\ 0 & 0 & 0 & 1 \\ 0 & 0 & 0 & 0 \\ 0 & 1 & 0 & 0 \\ 0 & 0 & 0 & 0 \\ 0 & 0 & 0 & 0 \\ 0 & 0 & 0 & 0 \end{bmatrix}$$

4. Error control device according to Claim 1 for data units which are provided or are to be forwarded protected by a parity bit, characterised in that, in accordance with the first test submatrix P1, the control bit (K4) characterised by the column vector (S4) having only one zero element is formed by an exclusive-OR gating of the respective parity bit (PB) supplied with the data bit (M7) assigned to the row vector (Z7) having the zero element in accordance with the relationship

K4 = PB # M7,

and in that the parity bit (PB') required in each case for the forwarding of a data unit is formed analogously in accordance with the relationship

PB' = K4 # M7.

**Revendications**

1. Dispositif de sécurité pour protéger des données dans des unités de mémoire à accès direct, dans lequel les unités de données sont mémorisées avec un code de contrôle associé en étant réparties dans plusieurs modules de mémoire pouvant être commandés en parallèle et comportant un générateur de code de contrôle (ECC-GEN) pour produire le code de contrôle respectif, un générateur de syndromes (SYN-GEN) pour contrôler les unités de données mémorisées, et un dispositif de correction d'erreurs, le mot de code formé respectivement par une unité de données devant être protégée et un code de contrôle, correspondant à un code linéaire (n,k), qui comporte au total n = 12 positions binaires pour n-k = 4 bits de contrôle (k4 à k1) et k = 8 bits de données (M7 à M0) et qui est déterminé par une quantité de vecteurs de base indépendants linéairement et qui forment, en tant que lignes, une matrice de base

$G = [J_k \ P]$

qui est à nouveau constituée par une matrice unité ($J_k$) à (k,k) rangées et d'une matrice de contrôle (P) à (k,n-k) rangées, caractérisé par le fait que les 12 bits d'un mot de code forment respectivement trois groupes de bits de même taille (GR1 à GR3) comportant respectivement quatre bits conformément à la largeur respective d'un module de mémoire, qu'à partir de l'agencement normal d'un mot de code ayant pour forme

M7, ..., M0, K4, ..., K1

pour la formation du bit de contrôle (K4 à K1), il est prévu respectivement un circuit combinatoire logique qui travaille, conformément à la matrice de contrôle formée selon le schéma suivant

P = P1 + P2

avec la première matrice partielle de contrôle

$$
P1 = \begin{array}{c} Z7 \\ \\ . \\ . \\ . \\ \\ \\ Z0 \end{array}
\overset{\displaystyle S4..S1}{
\begin{bmatrix}
0 & 1 & 1 & 1 \\
1 & 1 & 1 & 1 \\
1 & 1 & 1 & 0 \\
1 & 1 & 0 & 1 \\
1 & 1 & 0 & 0 \\
1 & 0 & 1 & 1 \\
1 & 0 & 1 & 0 \\
1 & 0 & 0 & 1
\end{bmatrix}}
$$

sur la base de l'association des vecteurs de lignes (Z7 à Z0) ou bits de données (M...) et des vecteurs de colonnes (S4 à S1) aux bits de contrôle (K...) ayant le même indice (7 à 0 ou 4 à 1) ou avec la première matrice partielle de contrôle P1, modifiée au niveau des lignes et des colonnes, dans le cas d'une association, non établie avec des index identiques, des vecteurs des lignes et des colonnes aux bits de données et aux bits de contrôle, et avec la seconde matrice partielle de contrôle, additionnée, selon l'addition modulo 2, à la première matrice partielle de contrôle P1

P2 = N

N étant la matrice nulle, et que les différents groupes de bits (GR1 à GR3), qui doivent être mémorisés, sont formés à partir d'une association, avec des indices identiques, conformément au schéma

GR1 = {M0, M1, M3, M6}

GR2 = {M2, M4, M5, K4}

GR3 = {M7, K1, K2, K3}

à partir des bits existants de données et de contrôle (M7 à M0 et K4 à K1), la succession des bits de données indiqués et de contrôle pouvant être choisie d'une manière quelconque à l'intérieur de chaque groupe de bits.

2. Dispositif de sécurité suivant la revendication 1, caractérisé par le fait que le circuit combinatoire logique servant à former les bits de contrôle peut être commuté, en fonction d'une seconde matrice partielle supplémentaire de contrôle P2 = P2*, qui diffère de la matrice nulle N, pour accroître le degré de la capacité d'identification d'erreurs.

3. Dispositif de sécurité suivant la revendication 2, caractérisée par le fait que la seconde matrice partielle supplémentaire de contrôle possède, sur la base d'une association à indices identiques, la forme suivante :

**EP 0 294 678 B1**

$$P2 = P2* = \begin{bmatrix} 1 & 0 & 0 & 0 \\ 0 & 0 & 0 & 0 \\ 0 & 0 & 0 & 1 \\ 0 & 0 & 0 & 0 \\ 0 & 1 & 0 & 0 \\ 0 & 0 & 0 & 0 \\ 0 & 0 & 0 & 0 \\ 0 & 0 & 0 & 0 \end{bmatrix}$$

4. Dispositif de sécurité suivant la revendication 1 pour des unités de données, qui sont préparées ou doivent être retransmises en étant protégées par un bit de parité, caractérisé par le fait que le bit de contrôle (K4), caractérisé par le vecteur de colonne (S4) possédant seulement un élément nul, est formé, conformément à la première matrice partielle de contrôle P1, par une combinaison OU-Exclusif du bit de parité (PB) respectivement délivré avec le bit de données (M7) associé au vecteur de ligne (Z7) possédant l'élément nul, conformément à la relation

K4 = PB # M7

et que le bit de parité (PB'), qui est respectivement nécessaire pour la retransmission d'une unité de données, est formé conformément à la relation

PB' = K4 # M7.

FIG 1

# FIG 2

## Fehlermeldungen

| lfd. Nr. | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 1 | | | | | | | | X | | | | X | X | | | |
| 2 | | | | | | | | X | | | X | | | X | | |
| 3 | | | | | | | | X | | X | | | | | X | |
| 4 | | | | | | | | X | X | | | | | | | X |
| 5 | | | | | | | X | | | | | X | | X | | |
| 6 | | | | | | | X | | | | X | | X | | | |
| 7 | | | | | | | X | | | X | | | | | | X |
| 8 | | | | | | | X | | X | | | | | | X | |
| 9 | | | | | | X | | | | | | X | | | X | |
| 10 | | | | | | X | | | | | X | | | | | X |
| 11 | | | | | | X | | | | X | | | X | | | |
| 12 | | | | | | X | | | X | | | | | X | | |
| 13 | | | | | X | | | | | | | X | | | | X |
| 14 | | | | | X | | | | | | X | | | | X | |
| 15 | | | | | X | | | | | X | | | | X | | |
| 16 | | | | | X | | | | X | | | | X | | | |
| 17 | | | | X | | | | | | | | | | X | X | |
| 18 | | | | X | | | | | | | | | X | | | X |
| 19 | | | | X | | | | | | X | X | | | | | |
| 20 | | | | X | | | | | X | | | X | | | | |
| 21 | | | | X | | X | X | | | | | | | | | |
| 22 | | | | X | X | | | X | | | | | | | | |
| 23 | | | X | | | | | | | | | | | X | | X |
| 24 | | | X | | | | | | | | | | X | | X | |
| 25 | | | X | | | | | | | X | | X | | | | |
| 26 | | | X | | | | | | X | | X | | | | | |
| 27 | | | X | | | X | | X | | | | | | | | |
| 28 | | | X | | X | | X | | | | | | | | | |
| 29 | | X | | | | | | | | | | | | | X | X |
| 30 | | X | | | | | | | | | | | X | X | | |
| 31 | | X | | | | | | | | | X | X | | | | |
| 32 | | X | | | | | | | X | X | | | | | | |
| 33 | | X | | | | | X | X | | | | | | | | |
| 34 | | X | | | X | X | | | | | | | | | | |
| 35 | | X | X | X | | | | | | | | | | | | |

# FIG 3

| fehler-hafte Bit-stelle | 0 | 1 | 2 | 3 | 4 | 5 | 6 | 7 | K1 | K2 | K3 | K4 |
|---|---|---|---|---|---|---|---|---|---|---|---|---|
| K4 | K1 | K2 | ✶ | K3 | ✶ | ✶ | 7 | 6 | 0 | 1 | 3 | |
| K3 | 4 | 5 | 6 | K4 | 0 | 1 | 2 | ✶ | ✶ | ✶ | | |
| K2 | 2 | K4 | 0 | 5 | 6 | 3 | 4 | ✶ | ✶ | | | |
| K1 | K4 | 2 | 1 | 4 | 3 | 6 | 5 | ✶ | | | | |
| 7 | 5 | 4 | 3 | 2 | 1 | 0 | K4 | | | | | |
| 6 | ✶ | ✶ | K3 | ✶ | K2 | K1 | | | | | | |
| 5 | 7 | K3 | ✶ | K2 | ✶ | | | | | | | |
| 4 | K3 | 7 | ✶ | K1 | | | | | | | | |
| 3 | ✶ | ✶ | 7 | | | | | | | | | |
| 2 | K2 | K1 | | | | | | | | | | |
| 1 | ✶ | | | | | | | | | | | |

# FIG 4

| Anzahl Faelle | Anzahl nicht erkannte Fehler | | | | |
| --- | --- | --- | --- | --- | --- |
| | 1-Bit | 2-Bit | 3-Bit | 4-Bit | Summe |
| 840 | 0 | 6 | 11 | 20 | 37 |
| 105 | 0 | 6 | 16 | 15 | 37 |
| 2520 | 0 | 6 | 12 | 22 | 40 |
| 10080 | 0 | 6 | 13 | 22 | 41 |
| 5040 | 0 | 6 | 9 | 26 | 41 |
| 2520 | 0 | 6 | 12 | 23 | 41 |
| 5040 | 0 | 6 | 15 | 20 | 41 |
| 30240 | 0 | 4 | 13 | 26 | 43 * |
| 5880 | 0 | 4 | 16 | 23 | 43 |
| 5040 | 0 | 4 | 11 | 28 | 43 |
| 5880 | 0 | 4 | 15 | 24 | 43 |
| 5040 | 0 | 6 | 16 | 22 | 44 |
| 10080 | 0 | 6 | 12 | 26 | 44 |
| 10080 | 0 | 4 | 14 | 26 | 44 |
| 10080 | 0 | 4 | 12 | 28 | 44 |
| 15960 | 0 | 4 | 13 | 28 | 45 |
| 25200 | 0 | 3 | 14 | 28 | 45 |
| 5040 | 0 | 4 | 15 | 26 | 45 |
| 2520 | 0 | 3 | 16 | 26 | 45 |
| 1680 | 0 | 3 | 12 | 30 | 45 |
| 40320 | 0 | 4 | 16 | 26 | 46 |
| 10080 | 0 | 4 | 14 | 28 | 46 |
| 11760 | 0 | 3 | 16 | 27 | 46 |
| 40320 | 0 | 3 | 15 | 28 | 46 |
| 20160 | 0 | 4 | 10 | 32 | 46 |
| 30240 | 0 | 3 | 13 | 30 | 46 |
| 10080 | 0 | 4 | 12 | 30 | 46 |
| 52920 | 0 | 3 | 14 | 30 | 47 |
| 420 | 0 | 3 | 18 | 26 | 47 |
| 15120 | 0 | 3 | 16 | 28 | 47 |
| 5040 | 0 | 3 | 12 | 32 | 47 |
| 60480 | 0 | 4 | 15 | 28 | 47 |
| 840 | 0 | 4 | 19 | 24 | 47 |
| 20160 | 0 | 4 | 17 | 26 | 47 |
| 5040 | 0 | 4 | 9 | 34 | 47 |
| 15960 | 0 | 4 | 12 | 31 | 47 |
| 5040 | 0 | 4 | 13 | 30 | 47 |
| 20160 | 0 | 4 | 11 | 32 | 47 |
| 53760 | 0 | 3 | 16 | 30 | 49 |
| 25200 | 0 | 3 | 18 | 28 | 49 |
| 40320 | 0 | 3 | 12 | 34 | 49 |
| 10080 | 0 | 3 | 10 | 36 | 49 |
| 2520 | 0 | 6 | 17 | 26 | 49 |
| 420 | 0 | 6 | 20 | 23 | 49 |
| 840 | 0 | 6 | 7 | 36 | 49 |
| . . . . | 0 | . . . . | . . . . | . . . | . . . |
| . . . . | 0 | . . . . | . . . . | . . . | . . . |
| . . . . | 0 | . . . . | . . . . | . . . | 59 |

825825 Faelle